# EUROPEAN PATENT APPLICATION

(11) **EP 2 272 662 A1**
(43) Date of publication of application: **12.01.2011**
(21) Application number: 10003363.8
(22) Date of filing: 29.03.2010
(51) Int. Cl.: B32B 7/04, B32B 29/00, E04F 15/02

(54) **Tile structure and assembly for covering predetermined surface**

(30) Priority: 22.06.2009 US 456767
(71) Applicant: Courey, Stephen P., Montreal QC 4S 1X5 (CA)
(72) Inventor: Courey, Stephen, Montreal Quebec 4S 1X5 (CA); Chiang, Shan, Taipei (TW)
(74) Representative: Emde, Eric

(57) **Abstract**

A tile structure and a tile assembly comprising a plurality of substantially equivalent, interconnected tile structures disposable in covering relation to a floor or other surface area. Each tile structure comprises outer and under layers fixedly secured in longitudinally and transversely offset relation to define a connecting groove and a connecting tongue extending along opposite longitudinal and transverse peripheral portions thereof. The connecting tongue on each of the plurality of tile structures is cooperatively dimensioned and configured to fit within the connecting groove on a next adjacently disposed tile structure. Secure interconnection between the tile structures is facilitated by a pressure sensitive or dry adhesive composition disposed on one surface at least partially within the connecting groove, while the remaining surfaces of the connecting tongue and groove are initially adhesive-free.

## Description

### BACKGROUND OF THE INVENTION

### Field of the Invention

This invention relates to a tile structure dimensioned and configured for interconnection with a plurality of substantially equivalent tile structures which collectively comprise a tile assembly disposable in overlying, floating relation to a supporting floor surface. Each tile structure comprises an outer layer and under layer integrally or fixedly secured to one another in a manner so as to define a connecting groove and a connecting tongue respectively extending along opposite peripheral portions thereof. The connecting tongue and groove are cooperatively dimensioned and configured to facilitate interconnection of laterally and longitudinally adjacent tile structures.

### Description of the Related Art

Numerous systems and structures have been devised in an attempt to provide effective, economically feasible and easily installed flooring surfaces. However, many of such known or conventional systems, while considered to be at least minimally acceptable, suffer from various problems and disadvantages. As a result such known flooring surfaces, while commercially available, have enjoyed a limited degree of popularity. Typically, floor tiles comprise a rectangular or square configuration, wherein peripheral edges thereof have cooperative, predetermined configurations and dimensions which facilitate connection to adjacently disposed and/or aligned tiles. As typically used or installed, a plurality of such tiles are interconnected so as to overlie a supporting floor surface.

Disadvantages and problems as indicated above include known or conventional assemblies of interconnected floor tiles having common joints or interconnecting seams being clearly apparent. This not only detracts from the appearance of the tiles but also derogatorily affects the practicality of the tile assembly due to the possibility of leakage of liquids beneath the tile structures and/or the tendency for dirt, debris, etc. to accumulate into the interconnecting junctions and/or seams. Therefore, the use of floor tile structures as conventionally designed and structured are frequently not acceptable for use in kitchens, bathrooms and other utility areas of a domestic environment and are similarly limited for use in many commercial environments. Therefore, while modular floor tiles have been developed as a low cost substitute for more conventional flooring surfaces such as wood floors, carpeting, etc. problems of the type set forth above are common place throughout the tile industry.

Accordingly, there is a significant and long recognized need for a practical yet decorative tile structure which is easily and quickly interconnected to substantially equivalent tile structures to collectively define a tile assembly. Such an improved tile assembly should also be structured to have sufficient versatility to be used as a "floating" floor surface. Further, each of the plurality of tile structures defining the tile assembly should be formed of a relatively thin, at least minimally flexible material which facilitates the large scale production of a significant plurality of such tile structures. Moreover, each of the proposed and improved tile structures should be such as to define cooperatively dimensioned and configured connecting grooves and connecting tongues, preferably formed along opposite peripheral portions of each tile structure. As such, laterally adjacent as well as longitudinally aligned ones of the plurality of tile structures may be efficiently and quickly interconnected along tight, non-obvious seams. As a result the seams should be only minimally detectable and thereby overcome problems associated with the seepage of liquid and/or the collection of dirt, debris, etc. therein.

The structuring, design and configuring of the plurality of tile structures should also be such as to provide a decorative, utilitarian flooring surface capable of being utilized in a variety of domestic and commercial applications and be sufficiently durable to provide a long operable life.

### Summary of the Invention

The present invention relates to a tile structure dimensioned and configured-for interconnection to a plurality of substantially equivalent tile structures so as to define a tile assembly capable of covering surfaces of varying dimension and configuration. Accordingly, the present invention comprises not only the individual tile structures but a tile assembly defining a plurality of interconnected tile structures, as set forth in greater detail hereinafter.

Each of the plurality of tile structures comprises an outer layer and an under layer integrally or otherwise fixedly secured to one another, either in an aligned, or offset, non-aligned relation. As will become apparent from the following discussion, the outer layer and under layer are each configured and constructed such that when fixedly secured to one another, the outer peripheral edges or sides are disposed in a longitudinally and transversely offset and/or nonaligned relation. As a result, a first longitudinal side of the outer layer is disposed in outwardly extending, overlying relation to a correspondingly disposed first longitudinal side of the under layer. Moreover, the first longitudinal sides of the outer and under layers are disposed in spaced relation to one another so as to define a connecting groove therebetween. The offset or nonaligned relation of the peripheral sides of the outer and under layers of each tile structure further defines a second longitudinal side of the under layer being disposed in outwardly extending relation beyond a corresponding second longitudinal side of the outer layer, thereby defining a connecting tongue.

Accordingly, the connecting groove extends along preferably the entire length of the first longitudinal sides of the outer and under layers and also extends along a transverse end or side of the tile structure in a continuous manner to define a connecting groove extension. In contrast, the connecting tongue extends preferably along the entire second longitudinal sides of the outer and under layers and also includes a connecting tongue extension, extending continuously along the transverse end or side of each tile structure which is opposed to the connecting groove extension, as set forth above.

Additional structural and operative features which facilitate a firm, reliable, close fitting engagement between laterally or longitudinally adjacent, connected tile structures is the provision of an adhesive composition formed on an under surface of the first longitudinal side of the outer layer. In contrast, the remaining "mating" surfaces of the first and second longitudinal sides defining the connecting groove and the connecting tongue are at least initially free of any adhesive composition.

As will be apparent from the more specific description hereinafter provided, once correspondingly disposed interconnecting grooves and connecting tongues of adjacently disposed tile structures become connected, the aforementioned adhesive composition will be disposed in interconnecting relation with a confronting "mating" surface of the connecting tongue of the next adjacent tile structure. In addition, at least one preferred embodiment of the tile structure and tile assembly comprises the aforementioned adhesive composition being a pressure sensitive composition. As such, the adhesive characteristics of the pressure sensitive adhesive composition will become activated once corresponding connecting grooves and connecting tongues are engaged with one another. Thereafter, a pressure is exerted on the first longitudinal side of the outer layer which at least partially defines the connecting groove as set forth above. This exerted pressure serves to effectively activate the adhesive composition. As a result, prior to the activating pressure being exerted, the adhesive composition will not demonstrate significant adherence to other surfaces to hamper manufacture, storage and transportation of the tile structures prior to their installation with other such equivalently configured and dimensioned tile structures.

Yet additional features of at least one preferred embodiment of the tile structure and tile assembly of the present invention is the cooperative dimensioning of the connecting groove and connecting tongue. More specifically, the outer surface of each connecting tongue of each tile structure has a larger transverse dimension than the transverse dimension of the under surface thereof. Moreover, the outer surface of the connecting tongue comprises a lesser transverse dimension than the transverse dimension of the under surface of the first longitudinal side of the outer layer. As a result, a space is formed upon insertion of a connecting tongue into a corresponding, adjacently disposed connecting groove of a next adjacent tile structure.

Such a space extends preferably along the entire length of the connecting groove and connecting groove extension and is more specifically located between an innermost, longitudinal edge of the inserted connecting tongue and the innermost or terminal portion of the connecting groove. This space is provided to overcome or accommodate any discrepancy between the intended or predetermined dimensions of interlocking connecting tongues and grooves thereby assuring a firm, stable, closely fitting seam or junction between adjacently disposed, connected tile structures. In addition, this inner space may serve as a collection area for any excess adhesive composition that may be forced or otherwise migrate into the innermost areas of the connecting groove when adjacently disposed tile structures are connected to one another. As a result, there will be no visible leakage or seepage of the adhesive composition through the seams or junctions of the interconnected tiles.

Therefore, each tile structure, as well as the plurality of connected tile structures defining the tile assembly, provide for an effective floor or like surface covering capable of being easily installed and maintained, while overcoming many of the disadvantages and problems of conventional or known tile systems as generally set forth above. These and other objects, features and advantages of the present invention will become clearer when the drawings as well as the detailed description are taken into consideration.

### Brief Description of the Drawings

For a fuller understanding of the nature of the present invention, reference should be had to the following detailed description taken in connection with the accompanying drawings in which:
Figure 1 is a top view of a tile structure of the present invention.
Figure 2 is a top view of a plurality of connected tile structures collectively defining a tile assembly of the present invention.
Figure 3 is a transverse sectional view along line 3-3 of Figure 1.
Figure 4 is a detailed sectional view in partial cutaway along line 4-4 of Figure 1.
Figure 5 is a detailed sectional view in cutaway along line 5-5 of Figure 2.
Figure 6 is a top view of a tile structure and covering assembly of at least one embodiment of the present invention.

Like reference numerals refer to like parts throughout the several views of the drawings.

### Detailed Description of the Preferred Embodiment

As a represented in the accompanying drawings, the present invention is directed to a tile structure generally indicated as 10 as well as a tile assembly comprising a plurality of connected tile structures 10, 10', etc. As such, each of the tile structures 10, 10', etc. comprises a substantially equivalent dimension and configuration so as to facilitate their connecting engagement with one another, as described in greater detail hereinafter.

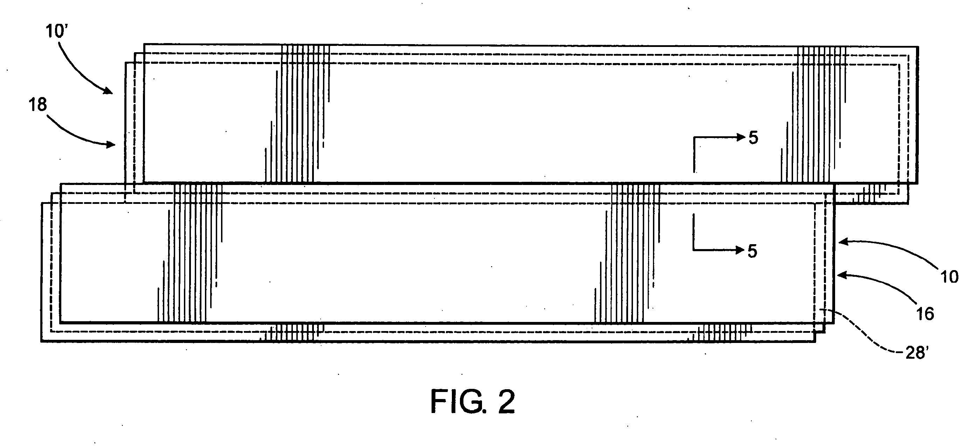

As also represented, each of the tile structures 10 may have a generally elongated, rectangular configuration, as well as other multi-sided configurations, which are cooperatively shaped to facilitate the interconnection thereof as they are disposed in overlying relation to a supporting surface. In addition, at least one preferred embodiment of the present invention comprises the tile assembly, as represented in Figure 2, installed as what is generally referred in the flooring industry as a "floating" floor assembly. When used in such an application, the plurality of interconnected tile structures 10, 10', etc. are not adhesively or otherwise fixedly secured to the underlying, supporting surface.

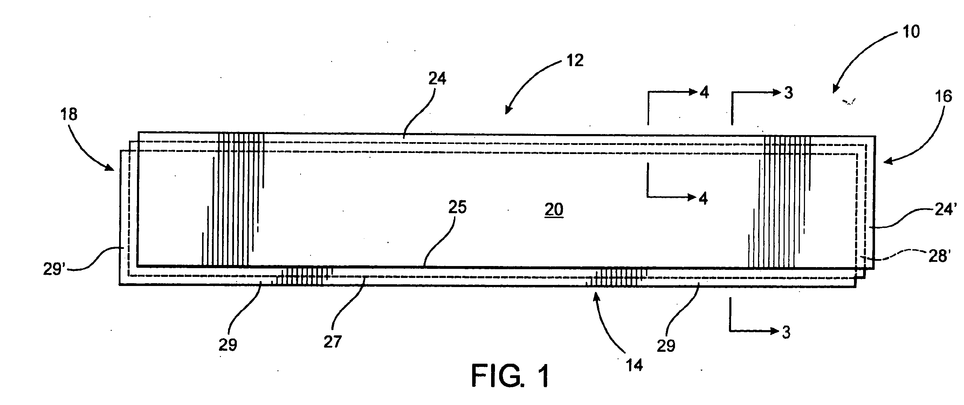

Moreover, while the overall shape or configuration of each of the tile structures 10 may vary, the represented, elongated, substantially rectangular shape of the embodiments of Figures 1-5 includes oppositely disposed elongated longitudinal ends or portions, as at 12 and 14. In addition, each of the tile structures 10, 10' is also defined by oppositely disposed transverse ends or portions, as at 16 and 18.

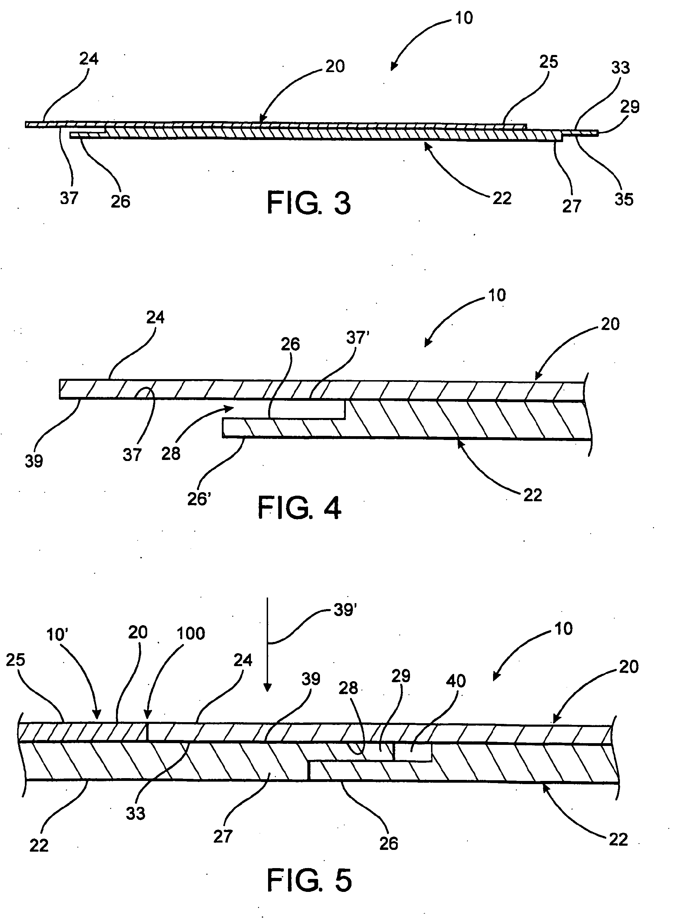

More specifically and with primary reference to Figures 3-5, each of the plurality of tile structures 10, 10', etc. comprises an outer layer 20 and an under layer 22 integrally or otherwise fixedly secured to one another. Moreover, the outer layer 20 and under layer 22 of the various embodiments of the present invention may be integrally or otherwise fixedly secured to one another in a longitudinally and/or transversely aligned or nonaligned relation. In particular, the central point of the outer layer 20 and the central point of the under layer 22 may, in at least one embodiment, be aligned, and in another embodiment, may be non-aligned. Specifically, however, the outer layer 20 and under layer 22 are dimensioned and/or configured in a manner such that the outer peripheral longitudinal and transverse edges or sides of the outer layer 20 and under layer 22 are disposed in an offset and/or nonaligned relation, as represented in Figures 1 and 2. In particular, as will become apparent from the following discussion and with reference to the Figures, the outer layer 20 and under layer 22 of at least one embodiment comprise different or dissimilar configurations such that, when the outer layer 20 and under layer 22 are secured to one another, the peripheral longitudinal and transverse edges or sides thereof are disposed in a nonaligned or offset relation to one another. This longitudinally and transversely offset relation of the outer peripheral longitudinal and transverse edges or sides of the upper layer 20 and the under layer 22 serves to at least partially define a connecting assembly which facilitates the connection of adjacently disposed ones of the plurality of tiles 10 and 10' as represented in Figure 2.

Accordingly, the outer layer 20 includes a first longitudinal side 24 which is disposed in outwardly extending, overlying and spaced relation to a first longitudinal side 26 of the under layer 22. The relative positions and dimensions of the first longitudinal side 24 of the outer layer 20 and the correspondingly disposed first longitudinal side 26 of the under layer 22 at least partially define a connecting groove, generally indicated as 28. With further reference to Figure 3, the outer layer 20 also includes a second, oppositely disposed longitudinal side 25 correspondingly disposed relative to a second longitudinal side 27 of the under layer 22. As represented, the second longitudinal side 27 of the under layer 22 extends outwardly from and beyond the correspondingly disposed second longitudinal side 25 of the outer layer 20. Moreover, the cooperative dimensions and configurations of the second longitudinal sides 25 and 27 serve to at least partially define a connecting tongue 29.

As clearly represented in Figure 4, the first longitudinal side 26 of the under layer 22 includes an interior surface 26' disposed in aligned, spaced relation with an inner portion 37' of the under surface 37 of the first longitudinal side 24 of the outer layer 20. Accordingly, the connecting groove 28 can be at least partially but more specifically defined by the interior surface 26' of the first longitudinal side 26 of the under layer 22 and the spaced apart inner portion 37' of the under surface 37 of the first longitudinal side 24 of the outer layer 20.

In addition, the connecting tongue 29 can be more specifically defined by at least a portion of the outer surface 33 and at least a portion of the under surface 35 of the second longitudinal side 27 of the under layer 22. It should be further noted that the outer surface 33 of at least one embodiment has a greater transverse dimension than the under surface 35 but a lesser transverse dimension than the under surface 37 of the first longitudinal side 24 of the outer layer 20 as clearly represented in Figure 3. The purpose of the cooperative dimensioning of the outer and under surfaces 33 and 35 of the second longitudinal side 27 of the under layer 22 relative to the under surface 37 of the first longitudinal side 24 of the outer layer 20 will become more apparent with regard to a detailed description of the interconnection between adjacently disposed ones of the tiles 10 and 10', with primary reference to Figure 5.

Yet additional structural and operative features associated with each of the plurality of tile structures 10, 10', etc. include the provision of an adhesive composition 39 disposed on and/or coated over the under surface 37 of the first longitudinal side 24 of the outer layer 20. In contrast, the surface 26' of the first longitudinal side 26 of the under layer 22 as well as the opposite surfaces 33 and 35 of the second longitudinal side 27 of the under layer 22 initially remain free of any adhesive composition coating. However, when the connecting tongue 29 is inserted within the connecting groove 28 of a next, adjacent tile structures 10 and 10', as represented in Figure 5, the adhesive composition coating 39 will be disposed in confronting engagement and interconnecting relation with the outer surface 33 of the second longitudinal side 27 of the under layer 22. Again, the adhesive interconnection between the under surface 37 of the first longitudinal side 24 and the outer surface 33 of the tongue 29 and/or second longitudinal side 27, as represented in Figure 5, will further facilitate a firm, stable, leak-free connecting joint or seam while facilitating installation of a plurality of such tile structures 10, 10', etc.

In addition, at least one preferred embodiment of each tile structure 10 comprises the aforementioned adhesive composition 39 being a pressure sensitive and/or "dry" adhesive composition. As such, the adhesive characteristics of the pressure sensitive, adhesive composition 39 will become activated once corresponding connecting grooves 28 and connecting tongues 29 are engaged with one another. Thereafter, a pressure is exerted on the exterior of the first longitudinal side 24 of the outer layer 20 which overlies the outer surface 33 of the inserted tongue 29 and/or second longitudinal side 27, as schematically represented by directional arrow 39'. This exerted pressure 39' serves to effectively activate the adhesive composition 39. As a result, prior to the activating pressure 39' being exerted, the adhesive composition will not demonstrate a significant tendency to adhere to other surfaces to the extent of hampering the manufacture, storage and/or handling of the tile structures 10, 10' prior to their installation with other such equivalently configured and dimensioned tile structures. Such a pressure sensitive or dry adhesive composition is manufactured by the Real Tack Industrial Co. Ltd. and is referred to on both the company's Technical Data Sheets and Material Safety Data Sheets as Product Identification: RT-0011.

At least one preferred embodiment of each of the tile structures 10, 10', etc. comprises the cooperative dimensioning of the first longitudinal sides 24 and 26 of the outer and under layers 20 and 22 respectively as cooperatively compared with the second longitudinal sides 25 and 27 of the outer and under layers 20 and 22 respectively, as set forth in detail above. This cooperative dimensioning and configuration results in the creation of a space 40 disposed within and extending along the entire length of the connecting groove 28 associated with interconnected sides of adjacent tile structures 10 and 10', as represented in Figure 2 and 5. Further, the space 40 may be considered a "tolerance" space in that it is provided to overcome any discrepancies in the dimensions and configurations of the connecting tongue 29 relative to that of the connecting groove 28 of adjacently disposed and connected tile structures 10, 10', etc. More specifically, if the dimensioning of either a connecting tongue 29 and/or connecting groove 28 deviates from the predetermined dimensions intended to accomplish a stable, tight and clean interconnection between adjacent ones of the tile structures 10 and 10', the existence of the spacing 40 will accommodate and overcome any such dimensional discrepancies. Accordingly, a tight, smooth, clean, unobtrusive seam, generally indicated as 100, will extend along connected peripheral portions of adjacently disposed tile structures 10, 10', etc.

Further and as set forth above, the provision of an adhesive coating composition 39 on the under surface 37 of the first longitudinal side 24 of the outer layer 20 may be at least partially forced into the space 40 as the connecting tongue 29 slides or is otherwise forcibly positioned into the connecting groove 28. Any excessive seepage or forced positioning of the adhesive composition 39 will collect in the space 40 thereby preventing any excessive amount of adhesive composition 39 from passing up through and beyond the seam 100 of interconnected peripheral portions of adjacently disposed and connected tile structures 10, 10', etc.

As set forth above and clearly represented in Figures 1 and 2, the first longitudinal side 24 extends continuously along one longitudinal peripheral portion 12 of each of the tile structures 10 and also extends continuously along a correspondingly disposed transverse side or end portion 16. As described above, the connecting groove 28 is at least partially defined by the first longitudinal side 24 extending along the entire longitudinal peripheral portion 12 and also includes a connecting groove extension 28' extending continuously along the transverse peripheral portion 16. In addition, the pressure sensitive and/or dry adhesive composition 39 may also be disposed within and along the length of the connecting groove extension 28' in a manner similar to that described above with reference to the adhesive composition being disposed over the under surface 37.

In contrast, the connecting tongue 29 extends substantially continuously along the opposite longitudinal peripheral portion 14 of each of the tile structures 10 and also extends continuously along a transverse, peripheral end or portion 18 which is oppositely disposed to the transverse peripheral portion 16. Therefore, each of the plurality of tile structures 10, 10', etc. may be easily and quickly connected in interlocking relation to next adjacent, laterally disposed tile structures as represented in Figure 2, as well as next adjacent tile structures which are longitudinally aligned in an end to end relation. Also the space 40 or more specifically an extension thereof (not shown for purposes of clarity) will be disposed along the length of the connecting groove extension 28'.

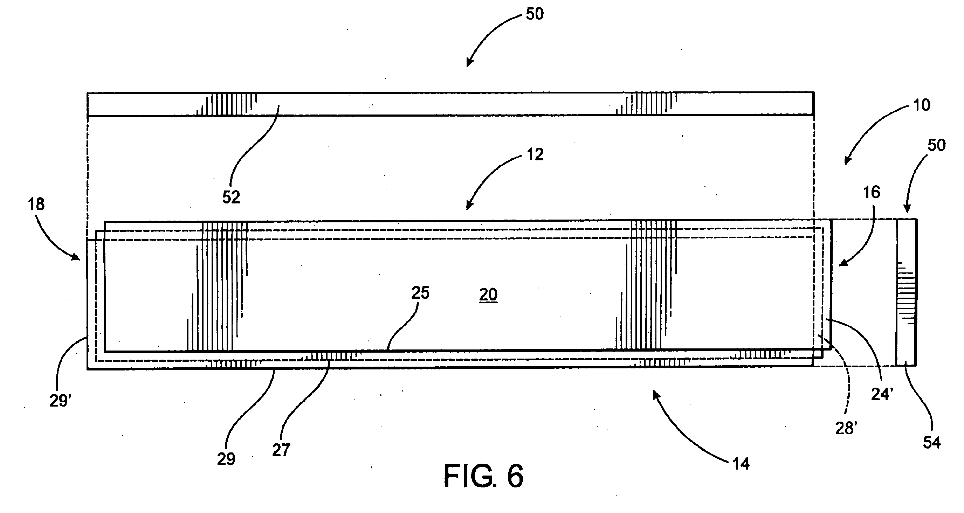

Moreover, at least one embodiment of the present invention further comprises a covering assembly 50 cooperatively structured and configured to be removably disposed at least partially within the connecting groove 28, and further, in an overlying relation to the adhesive composition disposed on the inner portion 37' of the under surface 37 of the first longitudinal side 24 of the outer layer 20. In particular, the covering assembly 50 of at least one embodiment comprises a longitudinal component 52 disposed at the elongated longitudinal portion 12 of the outer layer 20, and a transverse component 54 disposed at the transverse end 16 of the outer layer 20. The longitudinal component 52 and transverse component 54 of the covering assembly 50 may be separate and disjointed from one another, as generally illustrated in Figure 6, however, in at least one embodiment, the longitudinal component 52 and transverse component 54 may be connected to one another to form a substantially 90 degree angle therebetween.

More in particular, the covering assembly 50 may comprise virtually any material structured to practice the present invention in the intended manner, including, but not limited to a flexible paper material, cardboard, or rigid structuring. The covering assembly 50 of at least one embodiment is structured to minimize or avoid the adhesive component from prematurely or inadvertently being "released" or adhering to an oppositely disposed surface 26' of the connecting groove 28, for example, during shipment or transportation of the tile structure(s) 10, 10', etc.

Accordingly, it should be apparent that each individual tile structure 10, and the plurality of interconnected tile structures 10, 10', etc. defining the tile assembly of the present invention overcome many of the disadvantages and problems associated with known tile structures and tile assemblies, as generally set forth above.

Since many modifications, variations and changes in detail can be made to the described preferred embodiment of the invention, it is intended that all matters in the foregoing description and shown in the accompanying drawings be interpreted as illustrative and not in a limiting sense. Thus, the scope of the invention should be determined by the appended claims and their legal equivalents.

Now that the invention has been described,

## Claims

1. A tile structure configured for interconnection with a plurality of substantially equivalent tile structures, said tile structure comprising:
an outer layer and an under layer secured to one another,
a first longitudinal side of said outer layer disposed in outwardly extending, overlying relation to a corresponding first longitudinal side of said under layer,
said first longitudinal sides of said outer and under layers disposed in spaced relation to one another to define a connecting groove therebetween,
a second longitudinal side of said under layer disposed in outwardly extending relation beyond a corresponding second longitudinal side of said outer layer to define a connecting tongue, and
said first longitudinal side of said outer layer comprising an under surface and an adhesive composition disposed on said undersurface.

2. A tile structure as recited in claim 1 wherein said first longitudinal side of said under layer includes an interior surface disposed in aligned, spaced relation with an inner portion of said under surface of said first longitudinal side of said outer layer; said connecting groove at least partially defined by said interior surface and said inner portion of said under surface of said first longitudinal sides of said outer and under layers respectively.

3. A tile structure as recited in claim 2 wherein said second longitudinal side of said under layer includes an outer surface and an oppositely disposed under surface respectively defining outer and under surfaces of said connecting tongue.

4. A tile structure as recited in claim 3 wherein said outer surface of said connecting tongue includes a larger transverse dimension than that of said under surface of said connecting tongue.

5. A tile structure as recited in claim 4 wherein said outer surface of said connecting tongue comprises a lesser transverse dimension than said under surface of said first longitudinal side of said outer layer.

6. A tile structure as recited in claim 3 wherein said interior surface of said first longitudinal side of said under layer and said outer and under surfaces of said connecting tongue initially comprise adhesive-free surfaces.

7. A tile structure as recited in claim 1 wherein said adhesive composition comprises a pressure-sensitive adhesive.

8. A tile structure as recited in claim 1 wherein said outer layer and said under layer are fixedly attached in longitudinally and transversely offset relation to one another.

9. A tile structure as recited in claim 1 wherein said connecting tongue is dimensioned and configured to fit within said connecting groove on a next, adjacently disposed and connected one of the plurality of substantially equivalent tiles.

10. A tile structure as recited in claim 1 further comprising a covering assembly cooperatively structured and removably disposed at least partially within said connecting groove; said covering assembly removably disposed in an overlying relation to said adhesive composition.

11. A title assembly structured to cover a predetermined surface, said tile assembly comprising:
a plurality of tile structures comprising substantially equivalent configurations and dimensions sufficient to facilitate interconnection to one another and collective disposition in covering relation to the predetermined surface,
each of said plurality of tile structures including an outer layer and an under layer secured in a nonaligned relation to one another,
a first longitudinal side of said outer layer disposed in outwardly extending, overlying relation to a corresponding first longitudinal side of said under layer,
said first longitudinal sides of said outer and under layers disposed in spaced relation to one another to define a connecting groove therebetween,
said second longitudinal side of said under layer disposed in outwardly extending relation beyond a corresponding second longitudinal side of said outer layer, to define a connecting tongue, and
said connecting tongue dimensioned and configured to fit within said connecting groove of a next adjacent and connected one of said plurality of tile structures.

12. A tile assembly as recited in claim 11 wherein said first longitudinal side of said outer layer of each of said plurality of tile structures comprises an under surface and a pressure sensitive adhesive composition disposed on said undersurface of said first longitudinal side, and wherein said interior surface of said first longitudinal side of said under layer and said outer and under surfaces of said connecting tongue initially comprise adhesive-free surfaces.

13. A tile assembly as recited in claim 11 further comprising a connecting groove extension at least partially defined by a first transverse side of said outer layer disposed in outwardly extending, overlying relation to a corresponding first transverse side of said under layer.

14. A tile assembly as recited in claim 12 further comprising a connecting tongue extension at least partially defined by a second transverse side of said under layer disposed in outwardly extending relation beyond a corresponding second transverse side of said outer layer to define said connecting tongue extension.

15. A tile assembly as recited in claim 11 further comprising a tolerance space extending along a length of and disposed within said connecting groove substantially at a longitudinal edge of said connecting tongue at least partially inserted within said connecting groove.
